# EUROPEAN PATENT APPLICATION

(11) **EP 4 763 456 A1**
(43) Date of publication of application: **24.06.2026**
(21) Application number: 25224203.7
(22) Date of filing: 17.12.2025
(51) Int. Cl.: B27M 3/18, B27D 5/00, B29C 51/02, B29C 51/14, E05D 15/06, E06B 3/46, E06B 3/78, E06B 3/88

(54) **METHOD FOR MAKING A DOOR FOR FURNITURE AND DOOR THUS OBTAINED**

(30) Priority: 23.12.2024 IT 202400029847
(71) Applicant: 3 B S.P.A., 31040 Salgareda, Treviso (IT)
(72) Inventor: BERGAMO, Marco, I-31040 Salgareda, TREVISO (IT); GIUSTO, Francesco, I-31040 Salgareda, TREVISO (IT); CATTARIN, Elvis, I-31040 Salgareda, TREVISO (IT); LUKASCH, Luca, I-31040 Salgareda, TREVISO (IT)
(74) Representative: Zanettin, Gianluigi

(57) **Abstract**

The present invention relates to a method for manufacturing a furniture door with a three-dimensional design on a front face of said door, comprising in sequence the following operational steps: a) obtaining from a panel of at least one predefined material the body of a raw door having a predefined peripheral contour through cutting operations, said body of a raw door presenting a first face that will define a front face of the door and a second face that is opposite to the first and will define a rear face of the door; b) working the first face of the body of said raw door by performing operations of material removal and/or material addition to obtain said three-dimensional design on said first face; c) applying a thermoplastic covering film on the first face and on the peripheral edges of said raw door by means of thermoforming technique using a membrane press. Said panel of at least one predefined material comprises at least one layer of chipboard or honeycomb panel. Before step c), said method comprises a step d) of covering the peripheral edges of the body of said raw door by applying an edging laminate, so as to obtain a raw edged door. Said step c) is carried out on said raw edged door by applying the thermoplastic covering film extended both to the first face of the body of said raw door and to the edging foil.

## Description

### Field of application

The subject of the present invention is a method for making a door for furniture and a door thus obtained.

### Prior art

In the furniture field using wood and its derivatives, the panels intended for the production of doors for furniture can be made of different materials.

MDF, or Medium Density Fibreboard, is widely used for its smooth surface which facilitates the making of detailed designs, such as doors with frames, fluted profiles, recessed handles. However, it is more expensive and has a higher carbon footprint compared to other materials.

Chipboard is a more economical and sustainable solution compared to MDF, but it has a less refined surface finish, particularly when machined by material removal.

Honeycomb panel is a very lightweight material, ideal for reducing the weight of furniture, but has historically been unsuitable for the application of plastic film coverings by thermoforming using a membrane press because it cannot withstand high pressures.

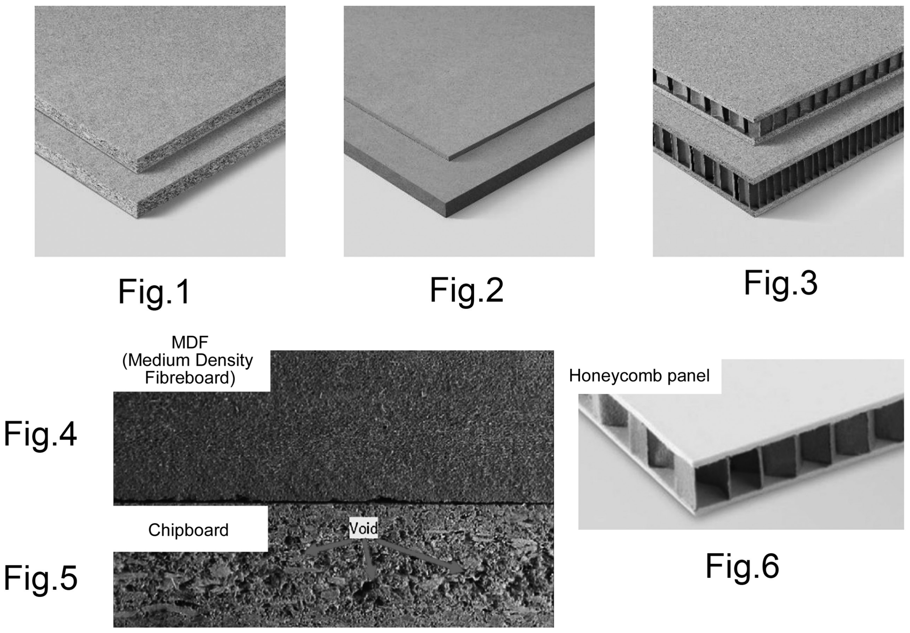

Figures 1 and 5 show two photographs of a chipboard panel. In particular, figure 5 shows the poor aesthetic finish of the edges of a chipboard panel.

Similarly, figures 3 and 6 show two photographs of a honeycomb panel. In particular, figure 6 shows the poor aesthetic finish of the edges of a honeycomb panel. Generally, the edges of a honeycomb panel are covered by strips on all four sides or only on two. For cost-saving reasons, the strips are generally made of chipboard. Whether two sides out of four or all four sides are covered, the aesthetic finish is not such as to make the door thus produced coverable by thermoforming with a membrane press.

Figures 2 and 4 show two photographs of an MDF panel. In particular, figure 4 shows the superior aesthetic finish of the edges of an MDF panel, essentially due to the superior compactness and density of the material.

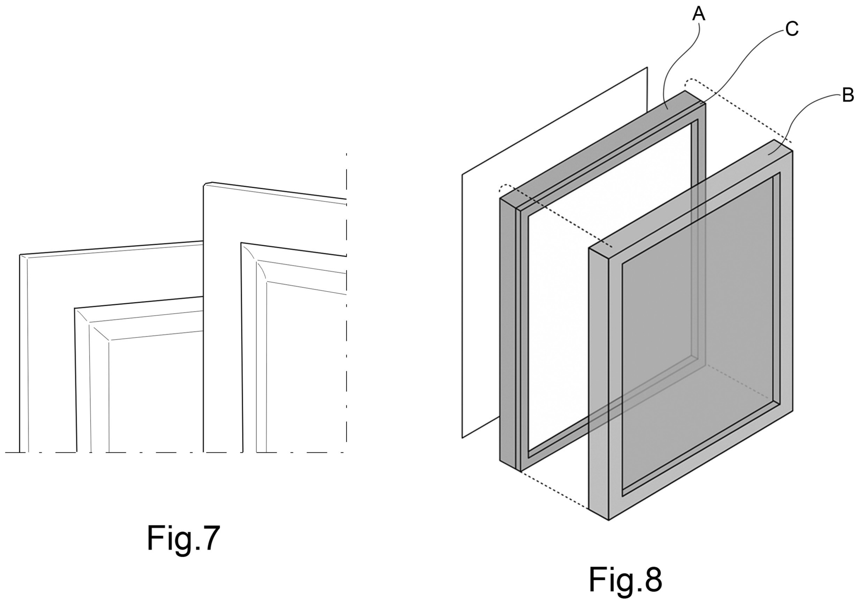

Once processed, the panels intended for the production of doors undergo a ennobling process through the application of a coating, so as to enhance them aesthetically and obtain the finished door. Examples of finished doors are shown in figure 7.

At an industrial level, the main technologies used in the furniture field to cover doors are essentially the following:
- thermoforming by membrane press;
- flat lamination;
- wrapping;
- pressure coating with thermosetting laminates; and
- painting.

The membrane press is used to create three-dimensional designs, allowing the application of plastic films on surfaces with reliefs and complex shapes. This technology requires materials capable of withstanding high pressures, traditionally excluding honeycomb panel.

Figure 8 shows an exploded view of the structure of a known type of door with a three-dimensional design. In particular, the MDF support A (or door body), an MDF insert to create a frame C, and a thermoplastic film B are visible.

Flat lamination processes are ideal for covering doors with flat surface designs and involve the application of paper, plastic films, laminates on smooth panels, compatible with materials such as chipboard and honeycomb panel.

The wrapping technology consists of the continuous application of a plastic film or other decorative materials on shaped profiles, panels, and doors; however, it is limited to surfaces with simple geometries.

The pressing of thermosetting laminates involves the use of sheets impregnated with thermosetting resins applied on raw panels by a combination of pressure and heat. It is particularly used for the production of doors with flat surfaces.

Painting technology requires a pretreatment or primer on the surface on which the paint is applied. This technology is used to achieve a uniform and resistant finish, suitable for both flat surfaces and surfaces with three-dimensional designs.

Currently, doors with three-dimensional designs (see for example fig. 7) are made of MDF.

Although it offers a high-quality surface, MDF is more expensive and has a higher carbon footprint compared to substrates such as chipboard. The latter is a more economical and sustainable alternative but has a poor surface finish, and generally has lower moisture resistance and inferior mechanical properties, making it unsuitable for manufacturing processes using a membrane press, which are normally adopted to make three-dimensional doors.

In the furniture field using wood and its derivatives, there is therefore a need to make doors with three-dimensional designs on the front face, reducing production costs without affecting the aesthetic finish level of the door itself.

### Disclosure of the invention

Therefore, the main object of the present invention is to eliminate, wholly or partly, the drawbacks of the aforementioned known technique, by providing a method for making a door for furniture with a three-dimensional design on a front face of the door itself that allows production costs to be reduced without affecting the aesthetic finish level of the door itself and to reduce the carbon footprint of the product.

A further object of the present invention is to provide a method for making a door for furniture with a three-dimensional design on a front face of the door itself which does not introduce particular complexities such as to make it economically disadvantageous.

A further object of the present invention is to provide a method for making a door for furniture with a three-dimensional design on a front face of the door itself which allows the weight of the door to be reduced, especially in the case of large-sized doors.

### Brief description of the drawings

The technical features of the invention, according to the aforementioned objects, are clearly identifiable from the content of the claims set out below and the advantages thereof will become more evident in the detailed description that follows, made with reference to the accompanying drawings, which represent one or more purely exemplifying and non-limiting embodiments, wherein:
- Figures 1 and 5 show two photographs of a chipboard panel;
- Figures 3 and 6 show two photographs of a honeycomb panel, in which the peripheral strips are not shown;
- Figures 2 and 4 show two photographs of an MDF panel;
- Figure 7 shows two examples of known finished doors with a front face provided with a three-dimensional design;
- Figure 8 shows a schematic exploded view of the structure of a known type of door with three-dimensional design;

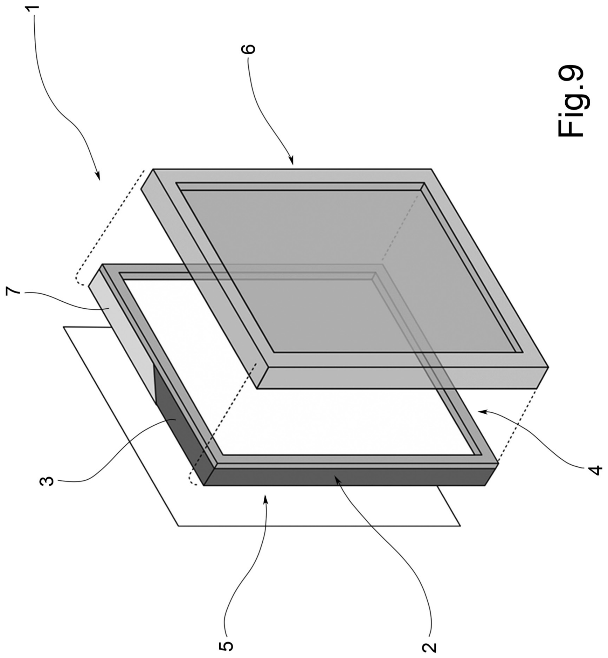

- Figure 9 shows a schematic exploded view of the structure of a door with three-dimensional design made according to the invention;

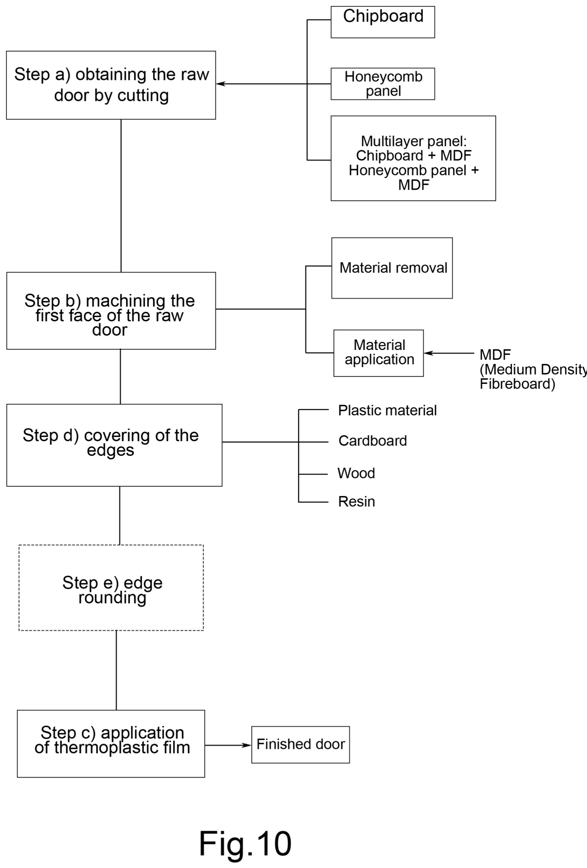

- Figure 10 shows a block diagram of the method according to a preferred embodiment of the invention;

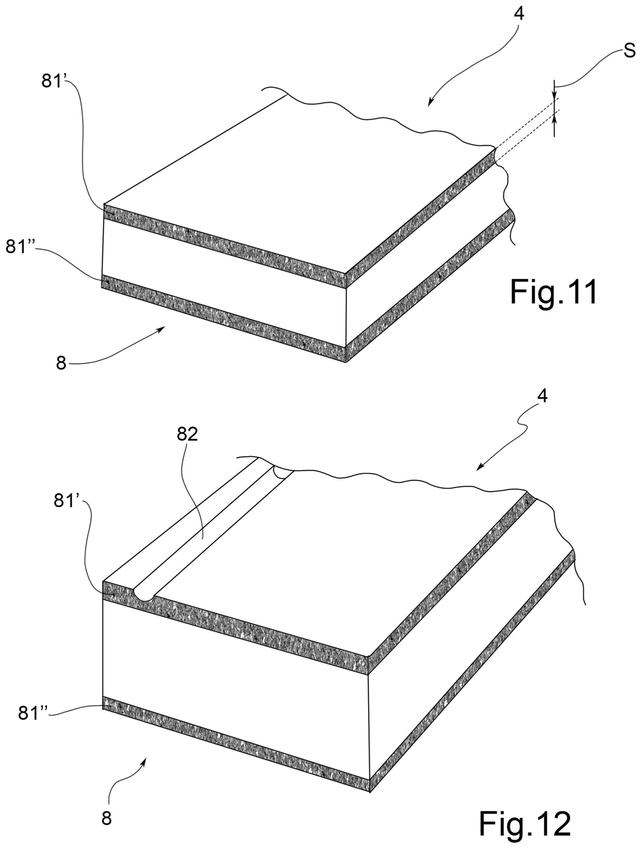

- Figures 11 to 15 schematically show embodiments of the invention relating to doors made wholly or partly of chipboard;

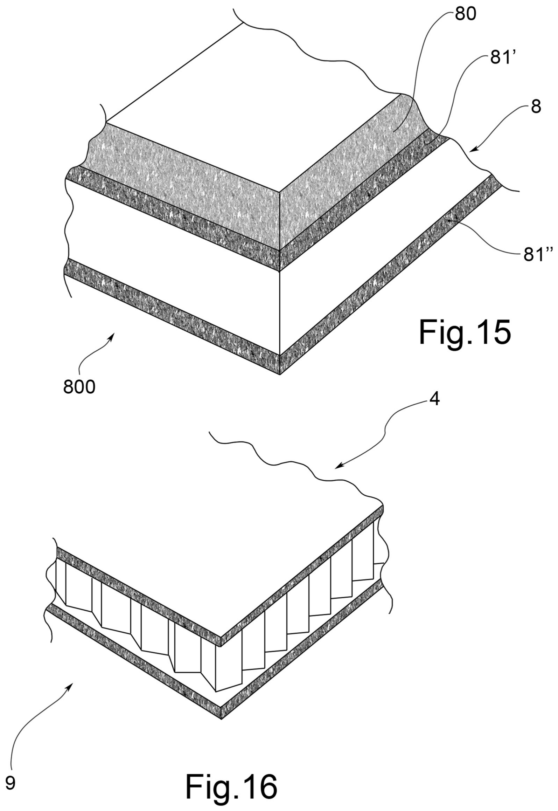

- Figures 16 to 19 schematically show embodiments of the invention relating to doors made wholly or partly of honeycomb panel;

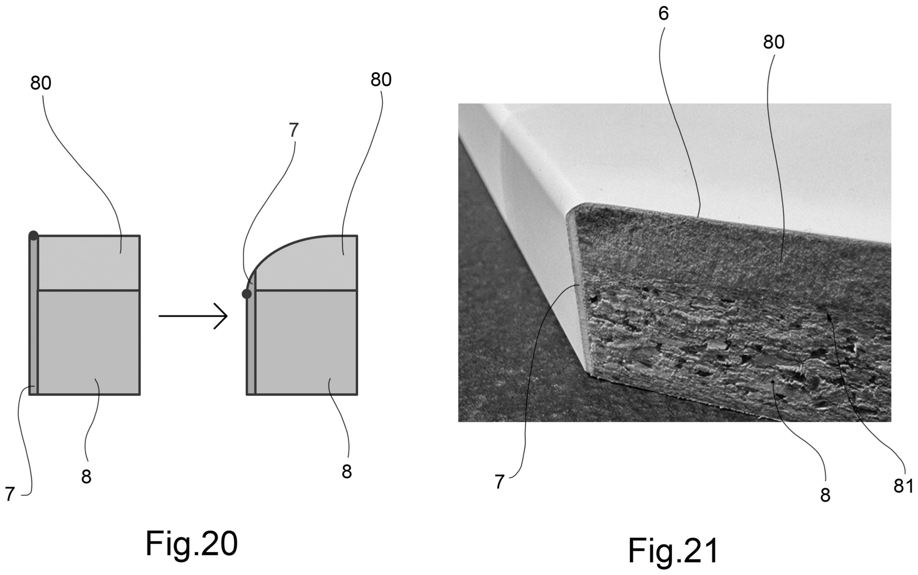

- Figure 20 schematically illustrates the rounding of the edge of a door according to a preferred embodiment of the invention; and
- Figure 21 shows a photograph of a section of a door made according to the invention.

### Detailed description

The door for furniture with a three-dimensional design on a front face of the door itself according to the invention is generally indicated with 1 in the attached Figures.

Herein and in the following description and claims, reference will be made to the door 1 in a condition of use. In this sense, any references to a lower or upper position, front or rear, or to a horizontal or vertical orientation must therefore be understood.

The invention will be described below starting from the method for making a door for furniture with a three-dimensional design on a front face of the door itself; it will subsequently be described in relation to the door for furniture thus obtained.

According to a general embodiment of the invention, as illustrated in the block diagram of figure 10, the method for making a door for furniture with a three-dimensional design on a front face of the door itself comprises a first operating step a) of obtaining - by means of cutting operations - the body 2 of a raw door having a predefined peripheral contour from a panel of at least one predefined material.

The aforesaid body 2 of a raw door has two main faces:
- a first face 4 which will define a front face of the door (that is, the face of the door visible from the outside when the door is closed); and
- a second face 5 which is opposite to the first and will define a rear face of the door.

After the aforesaid step a), the method comprises a step b) of machining the first face of the body of said raw door by carrying out material removal and/or material application operations to obtain said three-dimensional design on said first face.

Examples of doors with a three-dimensional design on said first face may be doors with frames, with fluted profiles, with recessed handles.

After the aforesaid step b), the method comprises a step c) of applying a coating film in thermoplastic material on the first face and on the peripheral edges of said raw door by thermoforming technique using a membrane press.

Preferably, the thermoplastic film consists of PVC or PET.

The cutting operations of a raw door from a panel (carried out in step a)) are known per se to a person skilled in the art and will therefore not be described in detail. Similarly, the membrane press technique (applied in step c)) is known per se to a skilled person and will therefore not be described in detail.

According to a first essential aspect of the present invention, said panel of at least one predefined material comprises at least one layer of chipboard or honeycomb panel.

Chipboard and honeycomb panel are materials known per se to a person skilled in the art (see figures 1, 5, 3 and 6) and will therefore be described below only in relation to the features functional to the understanding of the invention.

According to a further essential aspect of the invention, before step c), the method comprises a step d) of covering the peripheral edges of the body of said raw door by applying an edging laminate 7, so as to obtain an edged raw door.

Advantageously, the edging laminate can be obtained by applying:
- a preformed laminate in plastic, cardboard or wood; or
- a layer of resin or a hot melt polymer which is subsequently hardened and/or cross-linked through heat treatments or by exposure to UV rays.

Preferably, the edging laminate is preformed, and is made of plastic material. The plastic material is preferably made of ABS or PP. Preferably, the plastic laminate is provided on both main surfaces with an adhesion-promoting layer (commonly called primer) in order to facilitate bonding to the edge of the raw door on one side and facilitate adhesion on the opposite side of the coating film. This type of material is known per se to a person skilled in the art and therefore does not require further description.

Advantageously, step d) of covering the edges can be carried out between step a) and b) or, alternatively, immediately after step b), as illustrated in figure 10.

Operationally, the application of the preformed laminate 7 provides for its stable fixing to the peripheral edges, preferably by gluing.

According to the invention, said step c) is carried out on said edged raw door by applying the coating film in thermoplastic material extended both to the first face of the body of said raw door and to the edging laminate.

Thanks to the method according to the invention, it is possible to make a door for furniture with a three-dimensional design on a front face of the door itself, reducing production costs by replacing wholly or at least partly the MDF with chipboard or honeycomb panel, without affecting the aesthetic finish level of the door itself. In fact, thanks to the edge covering carried out before step c) of applying the thermoplastic film, the part of the raw door that is aesthetically poor when made of chipboard or honeycomb panel has been enhanced.

The increase in operational complexity resulting from the introduction of an additional operating step (step d)) is offset by the economic saving related to the total or partial replacement of MDF with chipboard or honeycomb panel for thick doors (indicatively for doors with thicknesses greater than 25 mm). In the case of replacement with chipboard, this compensation also occurs for doors with limited thickness.

In any case, the use of honeycomb panel makes it possible to obtain a much lighter finished product. This entails advantages in terms of transport, installation, and dimensioning of the door fixing systems in the furniture.

Therefore, in cases where the reduction of the door weight prevails over the reduction of the cost, the use of honeycomb panel is to be considered preferable to chipboard.

Thanks to the invention, it is therefore possible to provide a method for making a door for furniture with a three-dimensional design on a front face of the door itself which does not introduce particular complexities such as to make it economically disadvantageous.

Advantageously, the total or partial replacement of MDF allows the carbon footprint of the product to be reduced, since the production process and the materials used in the production of chipboard and honeycomb panel are significantly more environmentally sustainable.

The general idea underlying the present invention can be embodied in various variants which will now be described.

As already mentioned, said panel of at least one predefined material comprises at least one layer of chipboard.

According to a first embodiment of the invention, said panel consists of a chipboard layer 8 having a surface finishing layer 81' of a predefined thickness S, preferably not greater than 2.5 mm, preferably comprised between 0.5 and 2.5 mm (more preferably comprised between 1 and 2 mm), at the first face 4, as illustrated in figure 11.

In particular, said chipboard layer 8 is made of a layered structure, comprising a central layer made of coarse particles and outer layers made of finer particles. Each of these two fine outer layers 81', 81'' contributes to improving the compactness, homogeneity and aesthetic-mechanical properties of the panel, enhancing the quality of the illustrated multilayer structure. The surface finishing layer is defined by one of said two fine outer layers 81'.

Advantageously, as illustrated in figure 12, said machining step b) can be carried out by performing material removal operations from the first face of the body of said raw door so as to generate depressions 82 having depths less than the predefined thickness S of said surface finishing layer 81' present in the chipboard layer 8.

By operating in this way, it is possible to achieve a three-dimensional design on the first face of the panel while maintaining an adequate aesthetic level, even using chipboard instead of MDF. The depressions that define the three-dimensional design are in fact contained within the thickness of the surface finishing layer of the chipboard layer. Any material removals confined within the thickness of said surface finishing layer exhibit an adequate aesthetic finish due to the superior consistency/density of the finishing layer compared to the underlying base.

In such case, advantageously, due to the fact that the chipboard panel is able to ensure an adequate aesthetic level on the first face of the panel, the coating film in thermoplastic material may have a thickness preferably equal to or less than 0.30 mm, more preferably comprised between 0.15 - 0.25 mm, even more preferably comprised between 0.20 - 0.25 mm.

Alternatively, as illustrated in figure 12, said machining step b) can be carried out by performing material removal operations from the first face of the body of said raw door so as to generate depressions 83 having a depth P greater than the predefined thickness S of said surface finishing layer 81'.

By operating in this way, it is not possible to achieve a three-dimensional design on the first face of the panel while maintaining an adequate aesthetic level using chipboard instead of MDF. The depressions that define the three-dimensional design are in fact deeper than the thickness of the surface finishing layer and expose the central layer of chipboard beneath the finishing layer.

In such case, advantageously, to compensate for the fact that the chipboard panel is not able to ensure an adequate aesthetic level on the first face of the panel, the coating film in thermoplastic material used has a thickness equal to or greater than 0.25 mm. The greater thickness of the thermoplastic film compared to the previous case compensates (at least partly masking) the imperfections in terms of aesthetic definition.

In particular, the coating film in thermoplastic material can have a thickness comprised between 0.25 - 0.40 mm.

Preferably, in such case, the coating film also has an irregular surface texture obtained by embossing and/or by printed design. This surface texture is intended to visually mask imperfections, presenting them as a deliberate aesthetic effect.

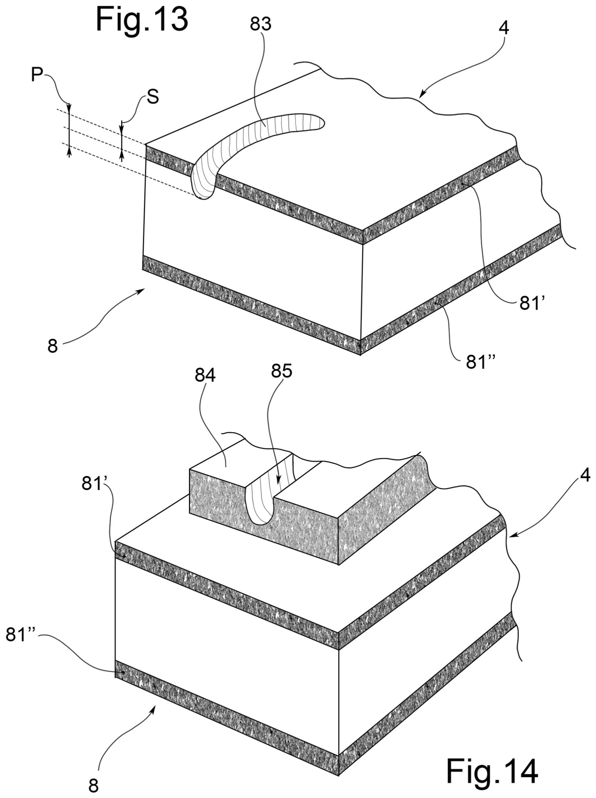

Advantageously, as illustrated in figure 14, again in the case where said panel consists of a chipboard layer 8 having a surface finishing layer 81' of a predefined thickness S at the first face 4, said machining step b) can be carried out by performing material application operations on the first face of the body of said raw door.

Operationally, it is possible to generate material applications 84 also having heights greater than the predefined thickness of said surface finishing layer.

Preferably, the applied material 84 consists of MDF.

By operating in this way, it is possible to achieve a three-dimensional design 85 on the first face of the panel while maintaining an adequate aesthetic level, even using chipboard instead of MDF at least in the making of the panel. The three-dimensional design is in fact defined by the MDF application and possibly also by the surface finishing layer of the chipboard layer 8.

In such case, due to the fact that the chipboard panel is able to ensure an adequate aesthetic level on the first face of the panel, the coating film in thermoplastic material may have a thickness preferably equal to or less than 0.30 mm, preferably comprised between 0.15 - 0.25 mm, more preferably comprised between 0.20 - 0.25 mm.

According to a second embodiment, as illustrated in figure 15, said panel consists of a multilayer 800 comprising:
- a chipboard layer 8; and
- an MDF layer 80.

The MDF layer 80 defines the first face of said raw door body and has a thickness not greater than 60% of the total thickness of the panel, preferably not greater than 45%, even more preferably not greater than 30%.

Advantageously, said machining step b) is carried out by performing material removal operations from the first face of the body of said raw door so as to generate depressions having depths not greater than the predefined thickness of said MDF layer.

By operating in this way, it is possible to achieve a three-dimensional design on the first face of the panel while maintaining an adequate aesthetic level, even using chipboard instead of MDF at least in the making of a part of the panel.

In such case, due to the fact that the panel made at least partly of chipboard is able to ensure an adequate aesthetic level on the first face of the panel, the coating film in thermoplastic material may have a thickness preferably equal to or less than 0.30 mm, preferably comprised between 0.15 - 0.25 mm, more preferably comprised between 0.20 - 0.25 mm.

As already mentioned, said panel of at least one predefined material may comprise at least one honeycomb panel layer.

According to a third embodiment, as illustrated in figure 16, the panel in said predefined material consists of a honeycomb panel layer 9 defined by a central cell body 93, enclosed in sandwich form between two solid walls 91 and 92 which form the two faces of the body of said raw door. Of these two walls, a first wall 91 defines the first face of the body of said raw door and has a predefined thickness, preferably not greater than 4 mm.

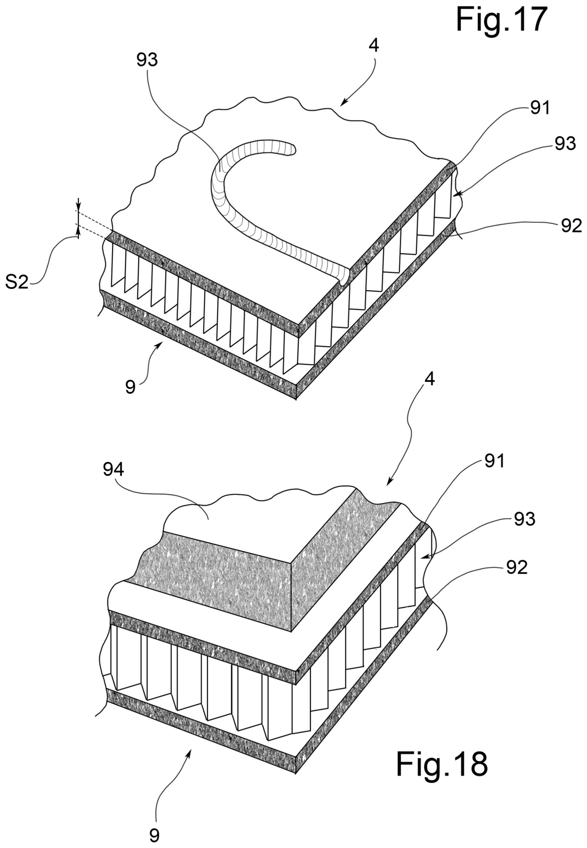

Advantageously, as illustrated in figure 17, said machining step b) can be carried out by performing material removal operations from the first face of the body of said raw door so as to generate depressions 93 having depths less than the predefined thickness S2 of said first wall 91 of the honeycomb panel layer.

By operating in this way, it is possible to achieve a three-dimensional design on the first face of the panel while maintaining an adequate aesthetic level, even using honeycomb panel instead of MDF. The depressions that define the three-dimensional design are in fact contained within the thickness of the first wall of the honeycomb panel layer. Any material removals confined within the thickness of said first wall exhibit an adequate aesthetic finish due to the superior consistency/density of said first wall compared to the underlying central cell body.

In such case, advantageously, due to the fact that the honeycomb panel is able to ensure an adequate aesthetic level on the first face of the panel, the coating film in thermoplastic material may have a thickness preferably equal to or less than 0.30 mm, preferably comprised between 0.15 - 0.25 mm, more preferably comprised between 0.20 - 0.25 mm.

Advantageously, as illustrated in figure 18, again in the case where said panel consists of a honeycomb panel layer 9 defined by a central cell body 93 enclosed in sandwich form between two solid walls 91 and 92 which form the two faces 4, 5 of the body 2 of said raw door, said machining step b) can be carried out by performing material application operations on the first face of the body of said raw door.

Operationally, it is possible to generate material applications 94 also having heights greater than the predefined thickness of said first wall of the honeycomb panel layer.

Preferably, the applied material 94 consists of MDF.

By operating in this way, it is possible to achieve a three-dimensional design on the first face of the panel while maintaining an adequate aesthetic level, even using honeycomb panel instead of MDF at least in the making of the panel. The three-dimensional design is in fact defined by the MDF application and possibly also by the outer surface of the first wall of the honeycomb panel layer.

In such case, due to the fact that the honeycomb panel is able to ensure an adequate aesthetic level on the first face of the panel, the coating film in thermoplastic material may have a thickness preferably equal to or less than 0.30 mm, preferably comprised between 0.15 - 0.25 mm, more preferably comprised between 0.20 - 0.25 mm.

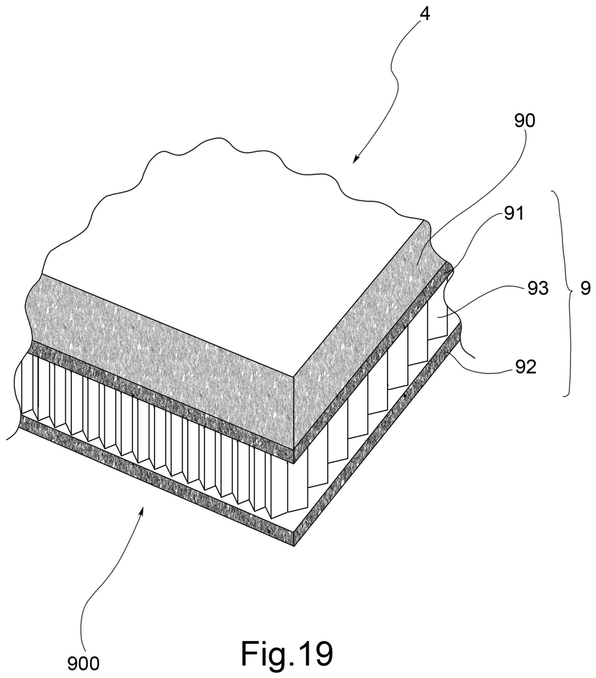

According to a fourth embodiment, illustrated in figure 19, said panel consists of a multilayer 900 comprising:
- a honeycomb panel layer 9; and
- an MDF layer 90.

The MDF layer defines the first face of said raw door body and has a thickness not greater than 50% of the total thickness of the panel, preferably not greater than 30%.

Advantageously, said machining step b) is carried out by performing material removal operations from the first face of the body of said raw door so as to generate depressions having depths not greater than the predefined thickness of said MDF layer.

By operating in this way, it is possible to achieve a three-dimensional design on the first face of the panel while maintaining an adequate aesthetic level, even using honeycomb panel instead of MDF at least in the making of a part of the panel.

In such case, due to the fact that the panel made at least partially of honeycomb panel is able to ensure an adequate aesthetic level on the first face of the panel, the coating film in thermoplastic material may have a thickness preferably equal to or less than 0.30 mm, more preferably comprised between 0.15 - 0.25 mm, even more preferably comprised between 0.20 - 0.25 mm.

Preferably, the method comprises a step e) of bevelling the sharp edges along the perimeter of the edged raw door.

As illustrated in figure 10, said bevelling step e) is carried out before the step c) of applying the thermoplastic film and after the step d) of covering the perimeter edges of the body of said raw door.

In particular, said bevelling consists of rounding the edges with a predefined radius of curvature.

Operationally, the membrane press technology requires processing of parts without sharp edges (otherwise the quality of the applied surface films and the durability of the press consumables are compromised).

It is also an aesthetic custom to design doors with rounded edges. In this case, it is necessary to create wide radii (R2, R3, R4) on a reduced thickness edge.

Preferably, the rounding is carried out with radii of curvature in the range R1 - R4.

The radius of curvature may be less than or equal to the thickness of said edging laminate. In such case, the rounding only affects said edging laminate. Consequently, the bevelling does not affect the body of the raw door and in particular the first face of the door itself. In other words, the bevelling does not alter the surface condition of the material defining the first face of the raw door. In such case, to make the door it is possible to use indifferently a panel consisting of a single layer of chipboard or honeycomb panel, or consisting of a multilayer chipboard/honeycomb panel and MDF.

Alternatively, the radius of curvature may be greater than the thickness of said edging laminate. In such case, the rounding affects not only said edging laminate, but also the body of the raw door and in particular the first face of the door itself. In other words, the bevelling alters the surface condition of the material defining the first face of the raw door. In such case, to make the door it is not possible to use indifferently a panel consisting of a single layer of chipboard or honeycomb panel, or consisting of a multilayer chipboard/honeycomb panel and MDF. The choice depends on how deeply the bevelling affects the first face of the raw door.

If the machining depth of the bevelling on the body of the raw door does not exceed the thickness of the surface finishing layer of the chipboard or of the first wall of the honeycomb panel, the door can be made from a chipboard or honeycomb panel.

Conversely, if the machining depth of the bevelling on the body of the raw door exceeds the thickness of the surface finishing layer of the chipboard or of the first wall of the honeycomb panel, two options are advantageously available:
- making the door from a multilayer panel (chipboard or honeycomb panel layer with an MDF layer), in which the MDF layer extends to the peripheral edges; or
- making the door from a panel consisting only of a chipboard or honeycomb panel layer in which at least some of the applied materials used to create the three-dimensional design extend up to the edges of the body of said raw door.

In both options, as illustrated in figures 20 and 21, the bevelling affects the MDF layer or applied material.

Advantageously, in the latter case - even in the presence of wide radii (R2, R3, R4) - it is possible to use edging covering laminates of reduced thickness, since the width of the rounding is no longer a limiting factor.

A door 1 for furniture with a three-dimensional design on a front face of the door itself according to the invention will now be described.

Preferably, but not necessarily, the door 1 is made following the method according to the invention, and in particular as previously described.

According to a general embodiment of the invention, the door 1 comprises a door body 2 having a predefined peripheral contour 3. A first face of said door body defines the front face 4 of the door and supports a three-dimensional design, while a second face 5, opposite to the first, defines a rear face of the door.

The door 1 also comprises a coating film 6 in thermoplastic material which covers the first face and the peripheral edges of said door.

According to a first aspect of the invention, said door body 2 is made of a portion of a panel of at least one predefined material comprising at least one layer of chipboard or honeycomb panel.

According to a further aspect of the invention, the peripheral edges of said door are defined by an edging laminate 7 which is placed covering the peripheral edges of said door body.

Preferably, said edging laminate is made of a material selected from the group consisting of plastic, cardboard, wood or resin hardened and/or cross-linked in situ.

The advantages deriving from the door 1 according to the invention are the same as those described in relation to the method according to the invention and will therefore not be described again.

Some specific embodiments will now be described, in which the door body 2 is made with a portion of a panel of at least one predefined material comprising:
- at least one chipboard layer; or
- at least one honeycomb panel layer.

We begin by describing the embodiments involving the use of chipboard.

According to a first embodiment of the invention, said panel consists of a chipboard layer having a surface finishing layer of a predefined thickness, preferably not greater than 2.5 mm, preferably comprised between 0.5 and 2.5 mm (more preferably comprised between 1 and 2 mm), at the first face 4, as illustrated in figure 11.

In particular, said chipboard layer 8 is made of a layered structure, comprising a central layer made of coarse particles and outer layers made of finer particles. Each of these two fine outer layers 81', 81'' contributes to improving the compactness, homogeneity and aesthetic-mechanical properties of the panel, enhancing the quality of the illustrated multilayer structure. The surface finishing layer is defined by one of said two fine outer layers 81'.

In particular, the aforesaid three-dimensional design may be defined by depressions in said chipboard layer 8 at the surface finishing layer with depths less than the predefined thickness of said surface finishing layer. The coating film in thermoplastic material has a thickness preferably equal to or less than 0.30 mm, preferably comprised between 0.15 - 0.25 mm, more preferably comprised between 0.20 - 0.25 mm.

Alternatively, the aforesaid three-dimensional design may be defined by depressions of said chipboard layer at the surface finishing layer with depths even greater than the predefined thickness of said surface finishing layer.

In such case, the coating film in thermoplastic material has a thickness equal to or greater than 0.25 mm.

More particularly, the coating film in thermoplastic material can have a thickness comprised between 0.25 - 0.40 mm.

Preferably, in this case, the aforesaid coating film has an irregular surface texture obtained by embossing and/or by printed design.

According to an alternative embodiment, the panel still consists of a chipboard layer having a surface finishing layer of a predefined thickness, preferably not greater than 2.5 mm, at the first face, but unlike the previously described embodiment, the aforesaid three-dimensional design is defined by applied materials that are arranged above said surface finishing layer and may have heights even greater than the predefined thickness of said surface finishing layer.

Preferably, the applied material is made of MDF.

Advantageously, in such case, the coating film in thermoplastic material may have a thickness preferably equal to or less than 0.30 mm, more preferably comprised between 0.15 - 0.25 mm, even more preferably comprised between 0.20 - 0.25 mm.

According to a further alternative embodiment, said panel consists of a multilayer 800 comprising:
- a chipboard layer 8; and
- an MDF layer 80, which defines the first face of said door body.

The MDF layer has a thickness not greater than 60% of the total thickness of the panel, preferably not greater than 45%, even more preferably not greater than 30%.

In such case, the aforesaid three-dimensional design is defined by depressions having depths not greater than the predefined thickness of said MDF layer.

Advantageously, the coating film in thermoplastic material may have a thickness preferably equal to or less than 0.30 mm, more preferably comprised between 0.15 - 0.25 mm, even more preferably comprised between 0.20 - 0.25 mm.

The embodiments using honeycomb panel will now be described.

According to a second embodiment of the invention, said panel consists of a honeycomb panel layer defined by a central cell body, enclosed in sandwich form between two solid walls which form the two faces of the body of said door, of these two walls a first wall defining the first face of the body of said door and having a predefined thickness, preferably not greater than 4 mm.

In particular, the aforesaid three-dimensional design may be defined by depressions of said honeycomb panel layer at said first wall of the honeycomb panel layer with depths less than the predefined thickness of said first wall. The coating film in thermoplastic material has a thickness preferably equal to or less than 0.30 mm, more preferably comprised between 0.15 - 0.25 mm, even more preferably comprised between 0.20 - 0.25 mm.

According to an alternative embodiment, the panel still consists of a honeycomb panel layer, but unlike the previously described embodiment, the aforesaid three-dimensional design is defined by applied materials arranged above said first wall of the honeycomb panel layer and may have heights even greater than the predefined thickness of said first wall.

Preferably, the applied material is made of MDF.

Advantageously, in such case, the coating film in thermoplastic material may have a thickness preferably equal to or less than 0.30 mm, more preferably comprised between 0.15 - 0.25 mm, even more preferably comprised between 0.20 - 0.25 mm.

According to a further alternative embodiment, said panel consists of a multilayer comprising:
- a honeycomb panel layer; and
- an MDF layer, which defines the first face of said door body.

The MDF layer has a thickness not greater than 50% of the total thickness of the panel, preferably not greater than 30%.

In such case, the aforesaid three-dimensional design is defined by depressions having depths not greater than the predefined thickness of said MDF layer.

Advantageously, the coating film in thermoplastic material may have a thickness preferably equal to or less than 0.30 mm, more preferably comprised between 0.15 - 0.25 mm, even more preferably comprised between 0.20 - 0.25 mm.

Preferably, the edges along the perimeter of the door 1 are rounded with a predefined radius of curvature.

The aforesaid radius of curvature may be less than or equal to the thickness of said edging laminate. In such case, preferably said rounding only affects the edging laminate.

Alternatively, the aforesaid radius of curvature may be greater than the thickness of said edging laminate. In such case, preferably said rounding affects both said edging laminate and the door body.

In the latter case, two options are advantageously available:
- the door body 2 is defined by a portion of a multilayer panel (chipboard or honeycomb panel layer with MDF layer), in which the MDF layer extends to the peripheral edges; or
- the door body 2 is defined by a portion of a panel consisting only of a chipboard or honeycomb panel layer in which at least some applied materials used to create the three-dimensional design extend to the edges of the body of said raw door.

In both options, as illustrated in figure 20, the bevelling affects the MDF layer or applied materials.

Advantageously, in the latter case - even in the presence of wide radii (R2, R3, R4) - it is possible to use reduced-thickness edging covering laminates, since the width of the rounding is no longer a limiting factor.

The invention allows numerous advantages to be achieved, some of which have already been described.

The method for making a door for furniture with a three-dimensional design on a front face of the door itself according to the invention allows to make a door for furniture with a three-dimensional design on a front face of the door itself, reducing production costs by replacing wholly or at least partly MDF with chipboard or honeycomb panel, without affecting the aesthetic finish level of the door itself. In fact, thanks to the edge covering carried out before step c) of applying the thermoplastic film, the part of the raw door that is aesthetically poor when made of chipboard or honeycomb panel has been enhanced.

The increase in operational complexity resulting from the introduction of an additional operational step (step d)) is offset by the economic saving linked to the total or partial replacement of MDF with chipboard or honeycomb panel for thick doors (indicatively for doors with thicknesses greater than 25 mm). In the case of replacement with chipboard, this compensation also applies to doors with limited thicknesses.

In any case, the use of honeycomb panel allows to obtain a much lighter finished product. This brings advantages in terms of transport, installation, and sizing of the door fixing systems within the furniture.

Therefore, in cases where the reduction in weight of the door prevails over the reduction in cost, the use of honeycomb panel is to be considered preferable to chipboard.

Advantageously, the total or partial replacement of MDF makes it possible to reduce the carbon footprint of the product since the production process and the materials used in the manufacture of chipboard and honeycomb panel are significantly more environmentally sustainable.

The method according to the invention is simple and easy to manage.

The invention thus eliminates the shortcomings of chipboard and honeycomb panel regarding edge finishing, while ensuring a competitive cost of the final product, despite a complication in the production process.

In particular, an edging process (through edge rounding) has been optimised to ensure compatibility with the membrane press, without compromising the aesthetic finish, allowing the use of chipboard and enabling the realisation of complex three-dimensional designs, opening new possibilities for the furniture field.

The invention thus conceived achieves the intended objects.

Obviously, it may also assume, in its practical implementation, forms and configurations different from the one illustrated above without thereby departing from the scope of protection of the present invention.

Moreover, all the details may be replaced by technically equivalent elements and the dimensions, shapes and materials used may be any, depending on the needs.

## Claims

1. Method for making a door for furniture with a three-dimensional design on a front face of the door itself, comprising in sequence the following operating steps:
a) obtaining from a panel of at least one predefined material the body of a raw door having a predefined peripheral contour by means of cutting operations, said body of a raw door having a first face which will define a front face of the door and a second face which is opposite to the first and will define a rear face of the door;
b) machining the first face of the body of said raw door by carrying out material removal and/or material application operations to obtain said three-dimensional design on said first face;
c) applying a coating film in thermoplastic material on the first face and on the peripheral edges of said raw door by thermoforming technique by means of a membrane press;
**characterised in that** said panel of at least one predefined material comprises at least one layer of chipboard or honeycomb panel
**and in that** before step c) said method comprises a step d) of covering the peripheral edges of the body of said raw door by applying an edging laminate, so as to obtain an edged raw door,
said step c) being carried out on said edged raw door by applying the coating film in thermoplastic material extended to both the first face of the body of said raw door, and to the edging laminate.

2. Method according to claim 1, wherein said edging laminate is obtained by applying a preformed laminate in plastic, cardboard or wood or by applying a layer of resin or a hot melt polymer which is subsequently cured and/or cross-linked through heat treatments or by exposure to UV rays.

3. Method according to claim 1 or 2, wherein said panel consists of a chipboard layer having a surface finishing layer of a predefined thickness, preferably not greater than 2.5 mm, at the first face.

4. Method according to claim 3, wherein said machining step b) is carried out by performing material removal operations from the first face of the body of said raw door so as to generate depressions having depths less than the predefined thickness of said surface finishing layer, the coating film in thermoplastic material having a thickness preferably equal to or less than 0.30 mm, more preferably comprised between 0.15 - 0.25 mm, even more preferably comprised between 0.20 - 0.25 mm.

5. Method according to claim 3, wherein said machining step b) is carried out by performing material removal operations from the first face of the body of said raw door so as to generate depressions having depths greater than the predefined thickness of said surface finishing layer, the coating film in thermoplastic material having a thickness greater than 0.25 mm, preferably comprised between 0.25 - 0.40 mm.

6. Method according to claim 5, wherein the coating film has an irregular surface texture obtained by embossing and/or by printing pattern.

7. Method according to claim 3, wherein said machining step b) is carried out by performing material application operations on the first face of the body of said raw door, being able to generate applications of material also having heights greater than the predefined thickness of said surface finishing layer, preferably the applied materials consisting of MDF, and wherein the coating film in thermoplastic material has a thickness preferably equal to or less than 0.30 mm, more preferably comprised between 0.15 - 0.25 mm, even more preferably comprised between 0.20 - 0.25 mm.

8. Method according to claim 1, wherein said panel consists of a multilayer comprising a chipboard layer and an MDF layer, which defines the first face of said raw door body and has a thickness not greater than 60% of the total thickness of the panel, preferably not greater than 45%, even more preferably not greater than 30%, and wherein said machining step b) is carried out by performing material removal operations from the first face of the body of said raw door so as to generate depressions having depths not greater than the predefined thickness of said MDF layer, the coating film in thermoplastic material having a thickness preferably equal to or less than 0.30 mm, more preferably comprised between 0.15 - 0.25 mm, even more preferably comprised between 0.20 - 0.25 mm.

9. Method according to claim 1, wherein said predefined material consists of a layer of honeycomb panel defined by a central cell body, sandwiched between two solid walls forming the two faces of the body of said raw door, of these two walls a first wall defining the first face of the body of said raw door and having a predefined thickness, preferably not greater than 4 mm.

10. Method according to claim 9, wherein said machining step b) is carried out by performing material removal operations from the first face of the body of said raw door so as to generate depressions having depths less than the predefined thickness of said first wall of the honeycomb panel layer and wherein the coating film in thermoplastic material has a thickness preferably equal to or less than 0.30 mm, more preferably comprised between 0.15 - 0.25 mm, even more preferably comprised between 0.20 - 0.25 mm.

11. Method according to claim 9, wherein said machining step b) is carried out by performing material application operations on the first face of the body of said raw door, generating applications of material having heights greater than the predefined thickness of said first wall of the honeycomb panel layer, preferably the applied material consisting of MDF, and wherein the coating film in thermoplastic material has a thickness preferably equal to or less than 0.30 mm, more preferably comprised between 0.15 - 0.25 mm, even more preferably comprised between 0.20 - 0.25 mm.

12. Method according to claim 1, wherein said panel consists of a multilayer comprising a layer of honeycomb panel and an MDF layer, which defines the first face of said raw door body and has a thickness not greater than 50% of the total thickness of the panel, preferably not greater than 30%, and wherein said machining step b) is carried out by performing material removal operations from the first face of the body of said raw door so as to generate depressions having depths not greater than the predefined thickness of said MDF layer, the coating film in thermoplastic material having a thickness preferably equal to or less than 0.30 mm, more preferably comprised between 0.15 - 0.25 mm, even more preferably comprised between 0.20 - 0.25 mm.

13. Method according to any one of the preceding claims, comprising - before step c) of applying the thermoplastic film and after step d) of covering the peripheral edges of the body of said raw door - a step e) of bevelling the sharp edges along the peripheral of the edged raw door.

14. Method according to claim 13, wherein said bevelling consists of rounding the edges with a predefined radius of curvature.

15. Method according to claim 14, wherein said radius of curvature is less than or equal to the thickness of said edging laminate, and wherein said rounding only affects said edging laminate.

16. Method according to claim 14, wherein said radius of curvature is greater than the thickness of said edging laminate, and wherein said radius affects both said edging laminate and the raw door body.

17. Method according to claim 16 when dependent on claim 7, 8, 11 or 12, wherein said applied materials extend or said MDF layer extends up to the edges of the body of said raw door.

18. Door for furniture with three-dimensional design on a front face of the door itself, comprising:
- a door body having a predefined peripheral contour, a first face of said door body defining the front face of the door and supporting a three-dimensional design, while a second face, opposite to the first, defining a rear face of the door,
- a coating film in thermoplastic material covering the first face and the peripheral edges of said door,
**characterised in that** said door body consists of a portion of a panel of at least one predefined material comprising at least one layer of chipboard or honeycomb panel
**and in that** the peripheral edges of said door are defined by an edging laminate which is placed covering the peripheral edges of said door body, said edging laminate preferably being made of a material selected from the group consisting of plastic, cardboard, wood or resin hardened and/or cross-linked in situ.

19. Door according to claim 18, wherein said panel consists of a chipboard layer having a surface finishing layer of a predefined thickness, preferably not greater than 2.5 mm, at the first face.

20. Door according to claim 19, wherein said three-dimensional design is defined by depressions of said chipboard layer at the surface finishing layer with depths less than the predefined thickness of said surface finishing layer, the coating film in thermoplastic material having a thickness preferably equal to or less than 0.30 mm, more preferably comprised between 0.15 - 0.25 mm, even more preferably comprised between 0.20 - 0.25 mm.

21. Door according to claim 19, wherein said three-dimensional design is defined by depressions of said chipboard layer at the surface finishing layer with depths even greater than the predefined thickness of said surface finishing layer, the coating film in thermoplastic material having a thickness greater than 0.25 mm.

22. Door according to claim 21, wherein the coating film in thermoplastic material has a thickness comprised between 0.25 - 0.40 mm, and wherein preferably said coating film has an irregular surface texture obtained by embossing and/or by printing pattern.

23. Door according to claim 19, wherein said three-dimensional design is defined by material applications arranged above said surface finishing layer and also having heights greater than the predefined thickness of said surface finishing layer, preferably the application material consisting of MDF, and wherein the coating film in thermoplastic material has a thickness preferably equal to or less than 0.30 mm, more preferably comprised between 0.15 - 0.25 mm, even more preferably comprised between 0.20 - 0.25 mm.

24. Door according to claim 19, wherein said panel consists of a multilayer comprising a chipboard layer and an MDF layer, which defines the first face of said raw door body and has a thickness not greater than 60% of the total thickness of the panel, preferably not greater than 45%, even more preferably not greater than 30%, and wherein said three-dimensional design is defined by depressions having depths not greater than the predefined thickness of said MDF layer, the coating film in thermoplastic material having a thickness preferably equal to or less than 0.30 mm, more preferably comprised between 0.15 - 0.25 mm, even more preferably comprised between 0.20 - 0.25 mm.

25. Door according to claim 18, wherein said panel consists of a layer of honeycomb panel defined by a central cell body, sandwiched between two solid walls forming the two faces of the body of said door, of these two walls a first wall defining the first face of the body of said door and having a predefined thickness, preferably not greater than 4 mm.

26. Door according to claim 25, wherein said three-dimensional design is defined by depressions of said layer of honeycomb panel at said first wall of the honeycomb panel layer with depths less than the predefined thickness of said first wall of the honeycomb panel layer and wherein the coating film in thermoplastic material having a thickness preferably equal to or less than 0.30 mm, more preferably comprised between 0.15 - 0.25 mm, even more preferably comprised between 0.20 - 0.25 mm.

27. Door according to claim 25, wherein said three-dimensional design is defined by material applications arranged above said first wall of the honeycomb panel layer and also having heights greater than the predefined thickness of said first wall of the honeycomb panel layer, preferably the application material consisting of MDF, and wherein the coating film in thermoplastic material has a thickness preferably equal to or less than 0.30 mm, more preferably comprised between 0.15 - 0.25 mm, even more preferably comprised between 0.20 - 0.25 mm.

28. Door according to claim 25, wherein said panel consists of a multilayer comprising a layer of honeycomb panel and an MDF layer, which defines the first face of said raw door body and has a thickness not greater than 50% of the total thickness of the panel, preferably not greater than 30%, and wherein said three-dimensional design is defined by depressions having depths not greater than the predefined thickness of said MDF layer, the coating film in thermoplastic material having a thickness preferably equal to or less than 0.30 mm, preferably comprised between 0.15 - 0.25 mm, more preferably comprised between 0.20 - 0.25 mm.

29. Door according to any one of claims 18 to 28, wherein the edges along the perimeter of the door are rounded with a predefined radius of curvature.

30. Door according to claim 29, wherein said radius of curvature is less than or equal to the thickness of said edging laminate, and wherein said rounding only affects said edging laminate.

31. Door according to claim 29, wherein said radius of curvature is greater than the thickness of said edging laminate, and wherein said radius affects both said edging laminate and the door body.

32. Door according to claim 31 when dependent on claim 23, 24, 25 or 26, wherein said applications extend or said MDF layer extends up to the edges of the body of said door.
